# EUROPÄISCHE PATENTANMELDUNG

(11) **EP 2 228 552 A1**
(43) Veröffentlichungstag der Anmeldung: **15.09.2010**
(21) Anmeldenummer: 10154309.8
(22) Anmeldetag: 23.02.2010
(51) Int. Cl.: F16B 37/04

(54) **Befestigungsvorrichtung zur Anordnung an einer Montageschiene**

(30) Priorität: 02.03.2009 DE 102009001282
(71) Anmelder: HILTI Aktiengesellschaft, 9494 Schaan (LI)
(72) Erfinder: Hermann, Fritz, 86899, Landsberg (DE); Burtscher, Norbert, 6712, Thüringen (AT); Ostermeier, Peter, 86911, Diessen (DE)

(57) **Zusammenfassung**

Die Erfindung betrifft eine Befestigungsvorrichtung (21) zur Anordnung an einer Montageschiene mit einem Hintergreifteil (22) zum Einführen in eine Montageöffnung der Montageschiene und zum Hintergreifen von Rändern der Montageöffnung der Montageschiene, mit einer Anlageplatte (42) zur aussenseitigen Anlage an der Montageschiene, mit einem Federelement (52) zur Vorspannung des Hintergreifteils (22) in eine in Bezug auf eine Drehachse (27) des Hintergreifteils (22), die senkrecht zu einer von der Anlageplatte (42) aufgespannten Ebene (E) steht, radiale Richtung, und mit einer Halteeinrichtung (31) zum Halten des Hintergreifteils (22) in einer vorgespannten Stellung, wobei beim Lösen der Halteeinrichtung (31) das Hintergreifteil (22) von dem Federelement (52) aus der Einführstellung in eine die Ränder der Montageöffnung hintergreifende Hintergreifstellung überführbar ist. Die Halteeinrichtung (31) umfasst ein Haltelement (32), das zum Lösen der Halteeinrichtung (31) in Bezug auf die Drehachse (27) des Hintergreifteils (22) axial, relativ zu der von der Anlageplatte (42) aufgespannten Ebene (E) versetzbar ist.

## Beschreibung

Die Erfindung betrifft eine Befestigungsvorrichtung zur Anordnung an einer Montageschiene, der im Oberbegriff des Patentanspruchs 1 genannten Art. Weiter betrifft die Erfindung eine Befestigungsanordnung mit einem plattenförmigen Element und mehreren Befestigungsvorrichtungen zur Anordnung des plattenförmigen Elementes an Montageschienen.

Im Gebiet der Montagetechnik werden Schienensysteme eingesetzt, an denen Leitungen z. B. für Wasser-, Heizung-, Lüftung-, Klima- und/oder Elektroinstallationen über entsprechende Befestigungsvorrichtungen festlegbar sind. An Schienensystemen werden auch Vorrichtungen zur Abhängung von Bauteilen vorgesehen, deren Stangenelemente ebenfalls mit geeigneten Befestigungsvorrichtungen an den Schienensystemen festlegbar sind. Weiter werden aus Schienen auch Ständerkonstruktionen ausgebildet, an denen plattenförmige Elemente, z. B. Solarpanele oder Fassadenelemente, festlegbar sind.

Für ein solches Schienensystem wird oftmals eine so genannte C-förmige Montageschiene verwendet, wie sie beispielsweise aus der DE 87 15 256 U1 bekannt ist. Der von der Montageschiene umschlossene Innenraum ist über eine entlang der Längserstreckung der Montageschiene verlaufende Montageöffnung von aussen her zugänglich, welche von Rändern seitlich begrenzt ist. Die Montageöffnung weist eine quer zu der Längserstreckung der Montageschiene verlaufende lichte Breite auf, die kleiner als die entsprechende Innenabmessung des Innenraums der Montageschiene ist.

Aus der EP 0 553 765 B1 ist eine Befestigungsvorrichtung zur Anordnung an einer C-förmigen Montageschiene bekannt. Die Befestigungsvorrichtung weist ein Hintergreifteil zum Einführen in eine Montageöffnung der Montageschiene und zum Hintergreifen von Rändern der Montageöffnung der Montageschiene auf. Das Hintergreifteil weist eine Breite, die kleiner als die lichte Breite der Montageöffnung ist, und eine Länge auf, die grösser als die lichte Breite der Montageöffnung ist. Weiter weist die Befestigungsvorrichtung eine Anlageplatte zur aussenseitigen Anlage an der Montageschiene auf. Zur Vorspannung des Hintergreifteils in eine in Bezug auf eine Drehachse des Hintergreifteils, die senkrecht zu einer von der Anlageplatte aufgespannten Ebene steht, radiale Richtung ist ein Federelement vorgesehen. Über eine Halteeinrichtung ist das Hintergreifteil in einer vorgespannten Stellung gehalten. Weiter ist eine mit dem Hintergreifteil zusammenwirkende Spannschraube zum Verspannen der Befestigungsvorrichtung an der Montageschiene vorgesehen. Das Federelement zur Vorspannung des Hintergreifteils ist hier zwischen der Anlageplatte und dem Hintergreifteil angeordnet. Die Halteeinrichtung umfasst Ausnehmungen an dem Hintergreifteil, die mit Vorsprüngen an der Anlageplatte zusammenwirken. Nach dem Einführen des Hintergreifteils in die Montageöffnung der Montageschiene wird die Halteeinrichtung durch axiales Versetzen der Spannschraube in Richtung der Anlageplatte gelöst, wobei das Hintergreifteil aufgrund der vorhandenen Vorspannung von dem Federelement selbstständig aus der Einführstellung in eine die Ränder der Montageöffnung hintergreifende Hintergreifstellung überführt wird. Die Verdrehung des Hintergreifteils wird durch am Hintergreifteil vorgesehene Anschlagflächen begrenzt, welche an den einander zugewandten Innenseiten der Ränder der Montageöffnung anschlagen.

Nachteilig an der bekannten Lösung ist, dass zum Verspannen der Befestigungsvorrichtung Werkzeuge erforderlich sind, die separat mitgeführt werden müssen.

Aufgabe der Erfindung ist es, eine Befestigungsvorrichtung zu schaffen, die eine einfache, werkzeuglose Montage bei exakter Ausrichtung des Hintergreifteils in Bezug auf die Montageschiene zur optimalen Krafteinleitung in die Montageschiene gewährleistet. Weiter ist es eine Aufgabe der Erfindung, eine Befestigungsanordnung zur Anordnung eines plattenförmigen Elementes, wie ein Solarpanel oder ein Fassadenelement, an Montageschienen zu schaffen, die eine einfache, werkzeuglose Montage des plattenförmigen Elementes ermöglicht.

Die Aufgaben sind durch die Merkmale der unabhängigen Ansprüche gelöst. Vorteilhafte Weiterbildungen sind in den Unteransprüchen dargelegt.

Gemäss der Erfindung umfasst die Halteeinrichtung ein Haltelement, das zum Lösen der Halteeinrichtung in Bezug auf die Drehachse des Hintergreifteils axial, relativ zu der von der Anlageplatte aufgespannten Ebene versetzbar ist.

Beim Versetzen des Halteelementes wird das vorgespannte Hintergreifteil freigegeben, so dass dieses von dem Federelement aus seiner Einführstellung in seine Hintergreifstellung überführt wird. Dabei verspannt die Befestigungsvorrichtung selbstständig an der Montageschiene, ohne dass ein separat mitgeführtes Werkzeug verwendet werden muss. Die erfindungsgemässe Befestigungsvorrichtung ist bei der Montage selbstauslösend, was die Verwendung dieser Befestigungsvorrichtung auch bei schlecht oder nicht zugänglichen Montagestellen ermöglicht. Die Befestigungsvorrichtung ist zur Befestigung von plattenförmigen Elementen, wie Solarpanele oder Fassadenelemente vorteilhaft. Des Weiteren lassen sich mit der erfindungsgemässen Befestigungsvorrichtung werkzeuglos Befestigungspunkte für Stangenelemente oder Rohrschellen an einer Montageschiene erstellen. Dazu weist die Befestigungsvorrichtung beispielsweise einen Innengewindeabschnitt auf, an dem ein entsprechend ausgebildetes Stangenelement festlegbar ist. Weiter können Verbindungselemente für Schienensystem, wie Montagewinkel, mit den erfindungsgemässen Befestigungsvorrichtungen versehen sein, welche einfach, sicher und werkzeuglos montierbar sind.

Vorteilhaft ragt von dem Halteelement in Richtung des Hintergreifteils ein Führungsdom zur Führung des Federelementes ab, der eine Montagehilfe für das Federelement sicherstellt. Weiter vorteilhaft weist das freie Ende des Führungsdoms einen Kupplungsabschnitt auf, der in einen entsprechend ausgebildeten Gegenkupplungsabschnitt am Hintergreifteil im zusammengebauten Zustand der Befestigungsvorrichtung eingreift und somit eine Drehlagerung des Hintergreifteils bildet. In einer Variante dazu ist das Halteelement entlang eines Führungsstiftes axial versetzbar, wobei der Führungsstift gleichzeitig eine Führung des Federelementes sicherstellt.

Vorzugsweise ragt von dem Halteelement zumindest ein Mitnahmeabschnitt ab, der die axiale Versetzung des Halteelementes relativ zu der von der Anlageplatte aufgespannten Ebene zum Lösen der Halteeinrichtung induziert beziehungsweise auslöst. Vorteilhaft kommt der zumindest eine Mitnahmeabschnitt beim Einführen des Hintergreifteils in die Montageschiene mit der Aussenseite der Montageschiene in Anlage, welche die Montageöffnung aufweist. Alternativ ragt der zumindest eine Mitnahmeabschnitt in Richtung des Innenraums der Montageschiene ab. Sobald der zumindest eine Mitnahmeabschnitt an der Aussenseite beziehungsweise an einem Innenabschnitt der Montageschiene anliegt, wird beim weiteren Einführen des Hintergreifteils in die Montageschiene die Halterung des Hintergreifteils aufgehoben. Vorteilhaft sind zumindest zwei, einander gegenüberliegend angeordnete Mitnahmeabschnitte an einem Halteelement vorgesehen, die jeweils an den einander gegenüberliegenden Stellen mit den Rändern der Montageöffnung beziehungsweise mit Innenabschnitten der Montageschiene in Anlage bringbar sind. Mehrere Mitnahmeabschnitte können die Befestigungsvorrichtung gegen ein unbeabsichtigtes Lösen der Halteeinrichtung sichern, z. B. bei einem falschen Positionieren ausserhalb der Montageschiene, da erst beim axialen Verschieben aufgrund der Anlage der Mitnahmeabschnitte das Hintergreifteil freigegeben wird.

Bevorzugt weist das Halteelement zumindest eine Anschlagnocke zur Begrenzung der axialen Versetzung des Halteelementes relativ zur Anlageplatte auf, womit diese Teile der Befestigungsvorrichtung unverlierbar miteinander verbunden sind.

Vorzugsweise weist die Anlageplatte eine längliche, im Querschnitt U-förmige, in die Montageöffnung der Montageschiene einbringbare Vertiefung auf, wobei das Hintergreifteil in dieser Vertiefung angeordnet ist. Die Breite der U-förmigen Vertiefung ist kleiner als die lichte Breite der Montageöffnung ausgebildet, damit die Vertiefung in die Montageschiene eindringen kann. Durch die Anordnung des Hintergreifteils in dieser Vertiefung lässt sich die Befestigungsvorrichtung einfach und kompakt ausbilden.

Bevorzugt ist am Bodenabschnitt der U-förmigen Vertiefung ein Lagerpunkt für das Hintergreifteil vorgesehen, welcher eine exakte Lagerung des Hintergreifteils in der Anlageplatte sicherstellt. Vorteilhaft weist das Hintergreifteil an seinem Drehpunkt eine abragende Lagernocke auf, die in eine Bohrung im Bodenabschnitt der U-förmigen Vertiefung eindringt.

Vorzugsweise ist in zumindest einer der Seitenwände der U-förmigen Vertiefung eine Führungsöffnung für das Hintergreifteil vorgesehen. Die Führungsöffnung stellt während dem Verdrehen des Hintergreifteils in seine Hintergreifstellung die Führung des Hintergreifteils sicher. Vorteilhaft weist die Führungsöffnung eine Anschlagfläche zur Drehwegbegrenzung auf, womit eine exakte Ausrichtung des Hintergreifteils gewährleistet und ein Überdrehen des Hintergreifteils verhindert ist. Eine derartige Befestigungsvorrichtung ist von einer speziellen Geometrie der Montageschiene, insbesondere von der Geometrie der Montageöffnung unabhängig. Vorteilhaft ist jeweils an beiden, einander gegenüberliegenden Seitenwänden der U-förmigen Vertiefung jeweils eine Anschlagflächen für das Hintergreifteil angeordnet.

Bevorzugt ist in zumindest einer der Seitenwände der U-förmigen Vertiefung eine axiale Führung für das Halteelement vorgesehen, womit ein Verkanten des Halteelementes beim axialen Versetzen desselben verhindert ist. Vorteilhaft weist das Halteelement eine Anschlagsnocke auf, welche beim axialen Versetzen in der Führung in der Seitenwand der U-förmigen Vertiefung entlanggleitet und gleichzeitig einen Anschlag für die maximale axiale Versetzbarkeit des Halteelementes bildet.

Vorzugsweise ist das Federelement zwischen dem Halteelement und dem Hintergreifteil vorgesehen, womit eine einfache und kompakte Ausgestaltung der Befestigungsvorrichtung ermöglicht ist. Vorteilhaft ist das Federelement eine Schenkelfeder, die z. B. aus einem Draht gefertigt ist. Der eine Anlageschenkel der Schenkelfeder liegt an dem Hintergreifteil und der andere Anlageschenkel liegt an der Anlageplatte an. Alternativ ist das Federelement beispielsweise aus einem Federblech gebildet. Das Federelement ist vorteilhaft derart ausgebildet, dass dieses auf das sich in der Hintergreifstellung befindliche Hintergreifteil eine Federkraft ausübt, was insbesondere bei dynamischen Lasten beziehungsweise Wechsellasten vorteilhaft ist.

Bevorzugt weist das Hintergreifteil an seiner Spannfläche zumindest eine rampenförmige Klemmfläche auf, die eine Klemmkulisse ausbildet und in einfacher Weise werkzeuglos ein selbstständiges Verspannen der Befestigungsvorrichtung an der Montageschiene sicherstellt. Die Schräge der Klemmflächen gewährleistet eine vorteilhafte Verspannung der Befestigungsvorrichtung an der Montageschiene.

Vorzugsweise ist ein mit der Anlageplatte verbindbares Adapterelement vorgesehen, welches ein Entfernen eines mit der Befestigungsvorrichtung festgelegten Elementes ermöglicht. Insbesondere wenn mit der Befestigungsvorrichtung plattenförmige Elemente festgelegt werden, ist die Anordnung einer beispielsweise über Schrauben an der Anlageplatte festgelegtes Adapterelement vorteilhaft. Zudem ermöglicht das Adapterelement die Anordnung unterschiedlich ausgebildeter Hintergreifteile und/oder Anlageplatten, welche entsprechend der Schienengeometrie ausgebildet sind, an der die Befestigungsvorrichtung angeordnet wird.

Eine erfindungsgemässe Befestigungsanordnung zur Anordnung des plattenförmigen Elementes an Montageschienen umfasst ein plattenförmiges Element und mehrere Befestigungsvorrichtungen, wobei die Befestigungsvorrichtungen an dem plattenförmigen Element festgelegt sind. Mehrere plattenförmige Elemente, wie Solarpanele oder Fassadenelement, können somit bündig aneinander stossend an den Montageschienen angeordnet werden. Da die Befestigungsvorrichtungen bei der Montage selbstauslösend sind und daher keine Zugänglichkeit der Befestigungsvorrichtungen erforderlich ist, kann die Anordnung der plattenförmigen Elemente auch an von aussen nicht zugänglichen Schienen-Konstruktionen erfolgen. Bei Solaranlagen werden die Ränder der einzelnen Panele zu deren Fixierung an den Montageschienen nicht mehr von Abschnitten der Befestigungsvorrichtung umgriffen, womit die gesamte Fläche der Panele z. B. zur Erzeugung von Strom zur Verfügung steht. Auch Fassadenelemente lassen sich somit ohne von aussen sichtbare Befestigungsvorrichtungen einfach und sicher an Montageschienen befestigen, was insbesondere aus ästhetischen Gründen erwünscht ist. Die Befestigungsvorrichtungen sind frei an dem plattenförmigen Element anordnenbar beziehungsweise platzierbar.

Die Erfindungen werden nachstehend anhand von Ausführungsbeispielen näher erläutert. Es zeigen:
- Fig. 1: Eine Befestigungsvorrichtung zur Anordnung eines Solarpanels an einer Montageschiene beim Einführen in die Montageschiene in einer Seitenansicht;
- Fig. 2: die Befestigungsvorrichtung gem. Fig. 1 in einer montierten Stellung;
- Fig. 3: die Befestigungsvorrichtung in einer perspektivischen Explosionsdarstellung;
- Fig. 4: das Hintergreifteil in einer perspektivischen Ansicht;
- Fig. 5: ein zweites Ausführungsbeispiel einer Befestigungsvorrichtung in einer perspektivischen Teil-Explosionsdarstellung; und
- Fig. 6: die Befestigungsvorrichtung gem. Fig. 5 in einer Seitenansicht; und
- Fig. 7: eine erfindungsgemässe Befestigungsanordnung.

Grundsätzlich sind in den Figuren gleiche Teile mit den gleichen Bezugszeichen versehen.

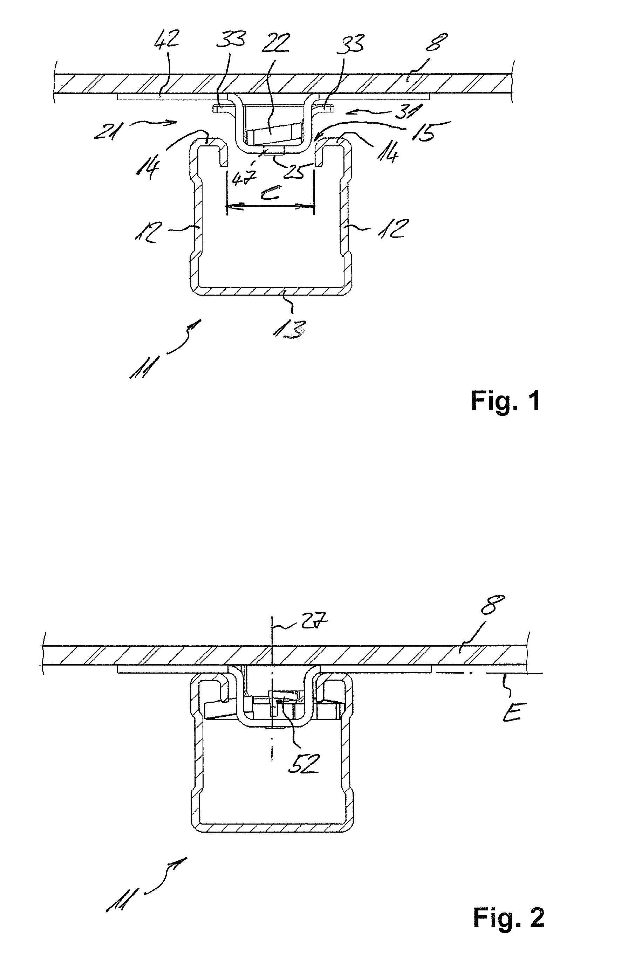

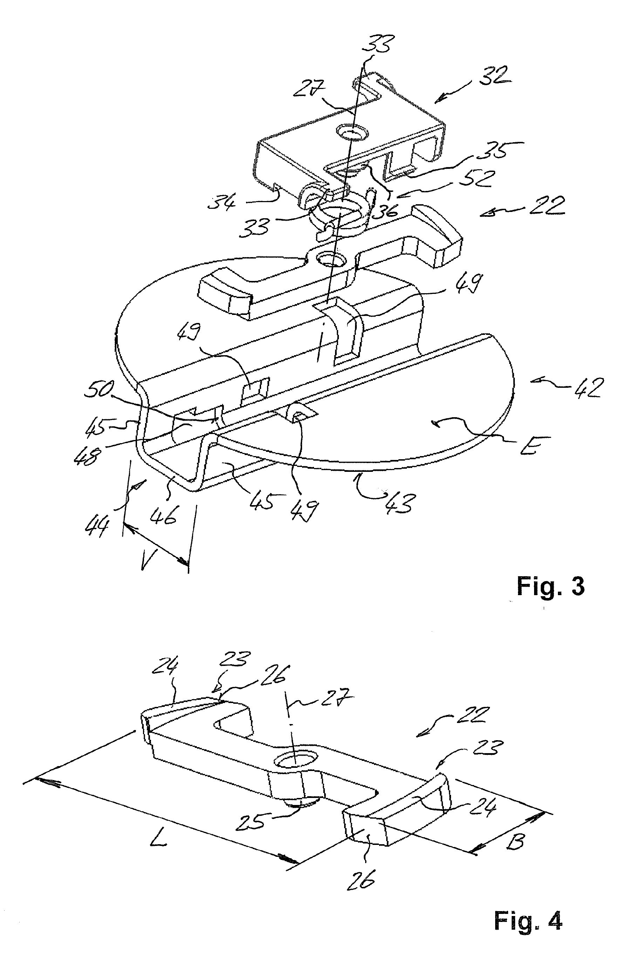

Die in den Figuren 1 bis 4 dargestellte Befestigungsvorrichtung 21 dient z. B. der Anordnung eines plattenförmigen Elementes 8 an einer Montageschiene 11. Zur Festlegung eines Stangenelementes an einer Montageschiene 11 weist - in einer hier nicht dargestellten Ausführungsform - die Befestigungsvorrichtung beispielsweise einen abragenden Gewindeabschnitt auf, an dem das Stangenelement angeordnet werden kann. Weiter können Verbindungsteile für Schienensysteme, wie Montagewinkel, eine oder mehrere der Befestigungsvorrichtungen 21 aufweisen.

Die Montageschiene 11 weist zwei einander gegenüberliegende Seitenwände 12, eine diese Seitenwände 12 verbindende Rückwand 13 sowie dieser Rückwand 13 gegenüberliegend eine von Rändern 14 begrenzte, in der Längserstreckung der Montageschiene 11 verlaufende Montageöffnung 15 auf. Die Montageöffnung 15 weist eine quer zu der Längserstreckung der Montageschiene 11 verlaufende lichte Breite C auf, welche durch die nach innen umgebogenen freien Enden der Ränder 14 definiert ist. Jede Montageschiene 11 umgibt einen Innenraum, der durch die Montageöffnung 15 von aussen her zugänglich ist.

Die Befestigungsvorrichtung 21 weist ein Hintergreifteil 22 mit einer Breite B, die kleiner als die lichte Breite C der Montageöffnung 15 in der Montageschiene 11 ist, und eine Länge L auf, die grösser als die lichte Breite C der Montageöffnung 15 in der Montageschiene 11 ist. An seinen beiden, einander gegenüberliegenden Spannflächen 23 ist das Hintergreifteil 22 jeweils mit einer rampenförmigen Klemmfläche 24 versehen, welche mit den freien Enden der Ränder 14 der Montageöffnung 15 in klemmende Anlage kommen. Weiter ragt von dem Hintergreifteil 22 mittig eine Lagernocke 25 ab, welche den Drehpunkt des Hintergreifteils 22 definiert, durch welche die Drehachse 27 des Hintergreifteils 22 verläuft. Für ein einfaches Eindrehen des Hintergreifteils 22 in seine Hintergreifstellung sind die vorlaufenden Kanten 26 jeweils abgefast.

Weiter umfasst die Befestigungsvorrichtung 21 eine Anlageplatte 42, die bei der Anordnung der Befestigungsvorrichtung 21 an der Montageschiene 11 mit ihrer Anlageseite 43 mit der, der Montageöffnung 15 benachbarten Aussenseite der Montageschiene 11 in Anlage kommt und diese somit stirnseitig beaufschlagt. Die Drehachse 27 des Hintergreifteils 22 steht senkrecht zu einer von der Anlageplatte 42 aufgespannten Ebene E. Die Anlageplatte 42 weist eine U-förmige, in die Montageöffnung 15 der Montageschiene 11 eindringbare Vertiefung 44 auf, deren Breite V kleiner als die lichte Breite C der Montageöffnung 15 der Montageschiene 11 ist. Das Hintergreifteil 22 ist in dieser Vertiefung 44 angeordnet, welche zwei einander gegenüberliegende Seitenwände 45 und einen diese verbindenden Bodenabschnitt 46 aufweist. Im Bodenabschnitt 46 ist eine Lageröffnung 47 zur Aufnahme der Lagernocke 25 des Hintergreifteils 22 vorgesehen, die zusammen den Lagerpunkt für das Hintergreifteil 22 bilden. Weiter sind in den Seitenwänden 45 der U-förmigen Vertiefung 44 jeweils eine Führungsöffnung 48 für das Hintergreifteil 22, welche eine Anschlagfläche 50 zur Drehwegbegrenzung des Hintergreifteils 22 aufweist, sowie Führungen 49 und 51 für ein nachfolgend noch beschriebenes Halteelement 32 vorgesehen.

Das Hintergreifteil 22 ist über ein Federelement 52 in eine in Bezug auf die Drehachse 27 des Hintergreifteils 22 radiale Richtung vorgespannt. Mittels einer Halteeinrichtung 31 wird das Hintergreifteil 22 in seiner vorgespannten Stellung gehalten. Beim Lösen der Halteeinrichtung 31 wird das Hintergreifteil 22 von dem Federelement 52 aus der Einführstellung in eine die Ränder 14 der Montageöffnung 15 der Montageschiene 11 hintergreifende Hintergreifstellung überführt. Die Halteeinrichtung 31 umfasst ein Haltelement 32, das zum Auslösen der Halteeinrichtung 31 in Bezug auf die Drehachse 27 des Hintergreifteils 22 axial, relativ zu der von der Anlageplatte 42 aufgespannten Ebene E versetzt wird. Das Federelement 52 ist eine Schenkelfeder und zwischen der Anlageplatte 42 und dem Hintergreifteil 22 vorgesehen.

Von dem Haltelement 32 ragen an zwei einander gegenüberliegenden Seiten jeweils ein Mitnahmeabschnitt 33 ab, die beim Einführen des Hintergreifteils 22 in die Montageschiene 11 mit der die Montageöffnung 15 aufweisenden Aussenseite der Montageschiene 11 in Anlage kommen und die axiale Versetzung des Halteelementes 32 relativ zu der von der Anlageplatte 42 aufgespannten Ebene E zum Auslösen der Halteeinrichtung 31 induzieren. Die Mitnahmeabschnitte 33 sind beim axialen Versetzen des Halteelementes 32 jeweils in Führungen 49 in der Anlageplatte 42 geführt. Des Weiteren ist das Halteelement 32 mit zwei Halteabschnitten 34 versehen, welche in der Einführstellung des Hintergreifteils 22 dieses entgegen der von dem Federelement 52 erzeugten Vorspannung in der Einführstellung des Hintergreifteils 22 hält. Weiter weist das Halteelement 32 einander gegenüberliegende Anschlagnocken 35 auf, die in den Führungen 51 in den Seitenwänden 45 der U-förmigen Vertiefung 44 der Anlageplatte 42 geführt sind und zusammen mit diesen die axiale Versetzbarkeit des Halteelementes 32 relativ zur Anlageplatte 42 begrenzen. Von dem Halteelement 32 ragt in Richtung des Hintergreifteils 22 ein Führungsdom 36 zur Führung des Federelementes 52 ab. Das freie Ende des Führungsdoms 36 dringt im zusammengebauten Zustand der Befestigungsvorrichtung 21 in das Hintergreifteil 22 bereichsweise ein, womit dieses in seiner Einführstellung zusätzlich gehalten ist.

Nachfolgend wird anhand der Figuren 1 und 2 der Montagevorgang kurz dargelegt. Die Befestigungsvorrichtung 21 wird beispielsweise vorgängig an dem plattenförmigen Element 8 festgelegt, z. B. angeklebt. Beim Einführen des Hintergreifteils 22 und der U-förmigen Vertiefung 44 der Anlageplatte 42 in die Montageschiene 11 kommen die Mitnahmeabschnitte 33 mit der die Montageöffnung 15 aufweisenden Aussenseite der Montageschiene 11 in Anlage (Fig. 1). Wird das Hintergreifteil 22 weiter in die Montageschiene 11 eingeführt, wird das Halteelement 32 axial in Richtung der Anlageplatte 42 beziehungsweise in Richtung des plattenförmigen Elementes 8 versetzt, wobei die Halteeinrichtung 31 ausgelöst wird. Aufgrund der vom Federelement 52 auf das Hintergreifteil 22 wirkenden Vorspannung wird das Hintergreifteil 22 nach dem Auslösen der Halteeinrichtung 31 in seine die freien Enden der Ränder 14 der Montageöffnung 15 Hintergreifstellung überführt (Fig. 2). Die rampenförmigen Klemmflächen 24 am Hintergreifteil 22 stellen die Verspannung der Befestigungsvorrichtung 21 an der Montageschiene 11 sicher und ermöglichen ein automatisches Nachspannen, beispielsweise bei dynamischen Lasten, wie Windbelastungen.

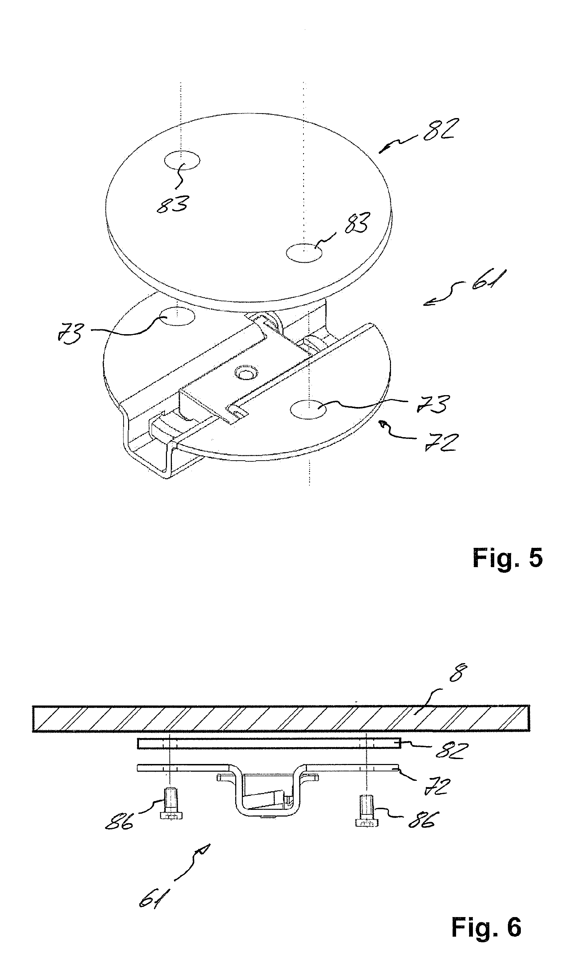

Die in den Figuren 5 und 6 gezeigte Befestigungsvorrichtung 61 unterscheidet sich lediglich dadurch von der zuvor beschriebenen Befestigungsvorrichtung 21, dass in der Anlageplatte 72 zwei Durchführöffnungen 73 und ein Adapterelement 82 vorgesehen ist, das zwei Bohrungen 83 mit Innengewindeabschnitten aufweist. Das Adapterelement 82 wird beispielsweise an dem plattenförmigen Element 8 festgelegt, wobei zur Festlegung der Befestigungsvorrichtung 61 Schrauben durch die Durchführöffnungen 73 in der Anlageplatte 72 hindurch in die Bohrungen 83 des Adapterelementes 82 einschraubbar sind. Die Schrauben 86 drücken in ihrem verspannten Zustand vorteilhaft nicht auf das plattenförmige Element 8. Die Bohrungen 83 im Adapterelement 82 weisen beispielsweise der Anlageplatte 82 zugewandte Durchzüge auf, in denen längere Gewindeabschnitte anordnenbar sind. Alternativ zu Schrauben 86 und mit Innengewinde versehenen Bohrungen 83 kann auch ein Schnellverschluss, wie ein Exzenterhebel oder dergleichen, zur Festlegung der Anlageplatte an dem Adapterelement vorgesehen sein.

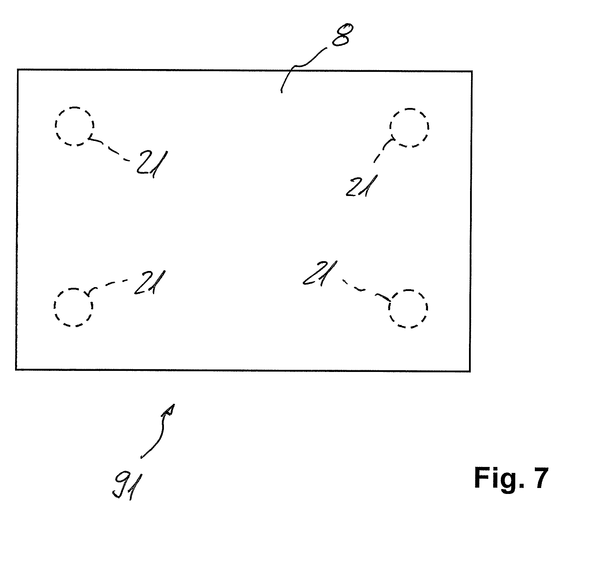

In der Figur 7 ist eine Befestigungsanordnung 91 zur Anordnung des plattenförmigen Elementes 8 an Montageschienen 11 dargestellt, wobei die Befestigungsanordnung 91 das plattenförmige Element 8 und mehrere an dem plattenförmigen Element 8 festgelegte Befestigungsvorrichtungen 21 umfasst.

## Patentansprüche

1. Befestigungsvorrichtung zur Anordnung an einer Montageschiene (11) mit einem Hintergreifteil (22) zum Einführen in eine Montageöffnung (15) der Montageschiene (11) und zum Hintergreifen von Rändern (14) der Montageöffnung (15) der Montageschiene (11),
mit einer Anlageplatte (42; 72) zur aussenseitigen Anlage an der Montageschiene (11),
mit einem Federelement (52) zur Vorspannung des Hintergreifteils (22) in eine in Bezug auf eine Drehachse (27) des Hintergreifteils (22), die senkrecht zu einer von der Anlageplatte (42; 72) aufgespannten Ebene (E) steht, radiale Richtung, und
mit einer Halteeinrichtung (31) zum Halten des Hintergreifteils (22) in einer vorgespannten Stellung, wobei beim Lösen der Halteeinrichtung (31) das Hintergreifteil (22) von dem Federelement (52) aus der Einführstellung in eine die Ränder (14) der Montageöffnung (15) hintergreifende Hintergreifstellung überführbar ist, **dadurch gekennzeichnet, dass**
die Halteeinrichtung (31) ein Haltelement (32) umfasst, das zum Lösen der Halteeinrichtung (31) in Bezug auf die Drehachse (27) des Hintergreifteils (22) axial, relativ zu der von der Anlageplatte (42; 72) aufgespannten Ebene (E) versetzbar ist.

2. Befestigungsvorrichtung nach Anspruch 1, **dadurch gekennzeichnet, dass** von dem Halteelement (32) zumindest ein Mitnahmeabschnitt (33) abragt, der die axiale Versetzung des Halteelementes (32) relativ zu der von der Anlageplatte (42; 72) aufgespannten Ebene (E) zum Lösen der Halteeinrichtung (31) induziert.

3. Befestigungsvorrichtung nach Anspruch 1 oder 2, **dadurch gekennzeichnet, dass** das Halteelement (32) zumindest eine Anschlagnocke (35) zur Begrenzung der axialen Versetzung des Halteelementes (32) relativ zur Anlageplatte (42; 72) aufweist.

4. Befestigungsvorrichtung nach einem der Ansprüche 1 bis 3, **dadurch gekennzeichnet, dass** die Anlageplatte (42; 72) eine längliche, im Querschnitt U-förmige, in die Montageöffnung (15) der Montageschiene (11) einbringbare Vertiefung (44) aufweist, wobei das Hintergreifteil (22) in dieser Vertiefung (44) angeordnet ist.

5. Befestigungsvorrichtung nach Anspruch 4, **dadurch gekennzeichnet, dass** am Bodenabschnitt (46) der U-förmigen Vertiefung (44) ein Lagerpunkt für das Hintergreifteil (22) vorgesehen ist.

6. Befestigungsvorrichtung nach Anspruch 4 oder 5, **dadurch gekennzeichnet, dass** in zumindest einer der Seitenwände (45) der U-förmigen Vertiefung (44) eine Führungsöffnung (48) für das Hintergreifteil (22) vorgesehen ist.

7. Befestigungsvorrichtung nach einem der Ansprüche 4 bis 6, **dadurch gekennzeichnet, dass** in zumindest einer der Seitenwände (45) der U-förmigen Vertiefung (44) eine axiale Führung (49) für das Halteelement (32) vorgesehen ist.

8. Befestigungsvorrichtung nach einem der Ansprüche 1 bis 7, **dadurch gekennzeichnet, dass** das Federelement (52) zwischen der Anlageplatte (42) und dem Hintergreifteil (22) vorgesehen ist.

9. Befestigungsvorrichtung nach einem der Ansprüche 1 bis 8, **dadurch gekennzeichnet, dass** das Hintergreifteil (22) an seiner Spannfläche (23) zumindest eine rampenförmige Klemmfläche (24) aufweist.

10. Befestigungsvorrichtung nach einem der Ansprüche 1 bis 9, **dadurch gekennzeichnet, dass** ein mit der Anlageplatte (72) verbindbares Adapterelement (82) vorgesehen ist.

11. Befestigungsanordnung mit einem plattenförmigen Element (8) und mehreren Befestigungsvorrichtungen (21) nach einem der Ansprüche 1 bis 10 zur Anordnung des plattenförmigen Elementes (8) an Montageschienen (11), **dadurch gekennzeichnet, dass** die Befestigungsvorrichtungen (21) an dem plattenförmigen Element (8) festgelegt sind.
